Europäisches Patentamt

(19) European Patent Office

Office européen des brevets

(11) Numéro de publication: **0 270 450 B1**

# (12) FASCICULE DE BREVET EUROPEEN

(45) Date de publication de fascicule du brevet:
23.10.91

(51) Int. Cl.⁵: **H02M 7/155**

(21) Numéro de dépôt: **87402671.9**

(22) Date de dépôt: **26.11.87**

(54) Circuit d'alimentation en basse tension, sans transformateur abaisseur de la tension du secteur.

(30) Priorité: **28.11.86 FR 8616669**

(43) Date de publication de la demande:
**08.06.88 Bulletin 88/23**

(45) Mention de la délivrance du brevet:
**23.10.91 Bulletin 91/43**

(84) Etats contractants désignés:
**DE GB IT NL**

(56) Documents cités:
**DE-A- 2 035 622**
**GB-A- 1 316 829**

**PATENT ABSTRACTS OF JAPAN, vol. 10, no.
45 (P-430)[2102], 21 février 1986; & JP-A-60
191 318 (MATSUSHITA DENKI SANGYO K.K.)
28-09-1985**

**WIRELESS WORLD, vol. 88, no. 1553, février
1982, page 42, Sheepen Place, Olchester,
GB; "Circuit ideas: Low-loss power supply"**

**INDUSTRIAL ELECTRONICS, vol. 6, no. 12,
décembre 1968, page 497; "Design notes: A
transformerless A.C.-to-D.C. power supply"**

(73) Titulaire: **SGS-THOMSON MICROELECTRO-
NICS S.A.**
**7, Avenue Galliéni**
**F-94250 Gentilly(FR)**

(72) Inventeur: **Durbeck, Xavier**
**THOMSON-CSF SCPI 19, avenue de Messine**
**F-75008 Paris(FR)**

(74) Mandataire: **de Beaumont, Michel et al**
**1bis, rue Champollion**
**F-38000 Grenoble(FR)**

## Description

La présente invention concerne un circuit d'alimentation en basse tension, directement à partir de la tension du secteur, sans utilisation d'un transformateur électromagnétique. Ce circuit d'alimentation, destiné à l'alimentation de circuits intégrés utilise un transfert de charge électrique entre deux condensateurs, par l'intermédiaire d'un dispositif semiconducteur de puissance tel qu'un thyristor ou un triac. Lorsque la tension de sortie devient inférieure à un seuil prédéterminé, un circuit de surveillance déclenche le dispositif semiconducteur de puissance.

L'alimentation basse tension sans transformateur selon l'invention est destinée à alimenter les circuits intégrés qui eux-mêmes commandent un triac, dans son utilisation pour le contrôle d'une charge directement branchée sur le secteur. Le triac est le composant le mieux adapté pour commander des charges connectées sur le secteur. Actuellement, avec le développement des circuits intégrés, les triacs sont généralement commandés par des fonctions logiques, ou linéaires, ou même par un microprocesseur. Une solution économique consiste à déclencher directement, sans transformateur ni coupleur optoélectronique, le triac par le circuit de commande. Ceci nécessite la réalisation d'alimentations basse tension à courant continu, qui conservent un point commun avec le secteur, de telle façon qu'il n'y ait pas de différence de masse entre les circuits d'alimentation, de commande, le triac et la charge commandée. Le courant de sortie de ces alimentations doit être suffisant pour amorcer le triac, mais également alimenter éventuellement d'autres composants tels que des afficheurs.

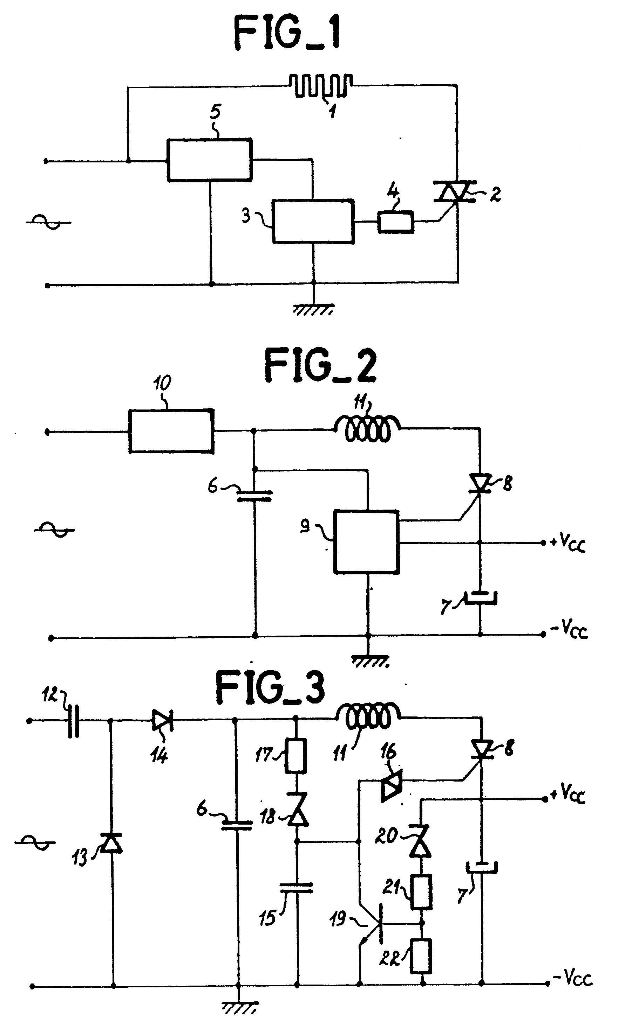

La figure 1 représente le schéma électrique de l'utilisation d'une alimentation à basse tension, sans transformateur, pour alimenter une charge au moyen d'un triac branché sur le secteur.

Une charge 1, qui peut être par exemple une résistance, est connectée directement sur le secteur, en 220 volts alternatif par exemple, par l'intermédiaire d'un triac 2. Celui-ci est déclenché en temps voulu et pendant le temps nécessaire, par un circuit de commande 3, dont le signal de sortie commande un diac 4 qui fait basculer la gâchette du triac 2. Le circuit de commande qui est très fréquemment, actuellement, un circuit linéaire ou logique ou un microprocesseur nécessite une alimentation qui lui est fournie par une alimentation basse tension 5. En fonction de ce qui a été dit précédemment, il est intéressant que l'alimentation basse tension 5 ait un point commun de masse avec les circuits intégrés du circuit de commande 3, et avec le secteur. Le document Industrial Electronics, vol. 6, N° 12, décembre 1968, page 497 divulgue un circuit d'alimentation basse tension sans transformateur abaisseur de la tension selon le préambule de la revendication 1.

L'objet de l'invention est de proposer une alimentation basse tension, telle que 5, qui n'ait pas de transformer abaisseur de tension, de sorte qu'il existe un commun entre le secteur, l'alimentation basse tension 5, et le (ou les) circuit(s) intégré(s) de 3 de commande de triac 2.

Le fondement de l'alimentation basse tension selon l'invention réside en un transfert de charges électriques entre deux condensateurs, le premier condensateur étant chargé par le secteur et le second condensateur étant déchargé par le circuit qu'il alimente. Entre les deux condensateurs se trouve un moyen de commutation, qui est le thyristor ou un triac, et un circuit de surveillance. Lorsque la tension aux bornes du second condensateur s'abaisse en dessous d'un seuil prédéterminé, parce que le circuit alimenté a consommé une partie de l'énergie stockée dans le second condensateur, le circuit de surveillance ferme le moyen de commutation et le premier condensateur transfère sa charge électrique dans le second condensateur. A ce moment là le niveau d'énergie dans le second condensateur étant remonté au dessus du seuil prédéterminé le circuit de surveillance ouvre le moyen de commutation, et le premier condensateur se recharge sur le secteur.

De façon plus précise l'invention consiste en un circuit d'alimentation en basse tension sans transformateur abaisseur de la tension du secteur, comportant un premier condensateur branché au secteur par l'intermédiaire d'un circuit de charge redresseur ; un deuxième condensateur dont une première borne est reliée à une première borne du premier condensateur et dont la deuxième constitue la sortie du circuit et est reliée à la deuxième borne du premier condensateur par l'intermédiaire d'un moyen de commutation ; un moyen de surveillance qui autorise le transfert d'énergie du premier condensateur vers le deuxième en activant le moyen de commutation quand la tension aux bornes du deuxième condensateur devient inférieure à un seuil prédéterminé, les deux premières bornes des condensateurs étant directement reliées à une phase du secteur constituant la masse.

L'invention sera mieux comprise par la description détaillée qui suit de quelques exemples de réalisation, cette description s'appuyant sur les figures jointes en annexe qui représentent :

figure 1 : schéma électrique de l'utilisation d'une alimentation en basse tension, pour alimenter une charge au moyen d'un triac ; cette figure a été précédemment décrite,

figure 2 : schéma électrique de principe de l'alimentation selon l'invention,

figure 3 : schéma électrique de l'alimentation positive selon l'invention,
figure 4, 5, 6 : oscillogrammes en différents points de l'alimentation positive de la figure 3,
figure 7 : schéma électrique de l'alimentation négative selon l'invention,
figure 8 : schéma électrique d'une forme simplifiée de l'alimentation positive selon l'invention,
figures 9 et 10 : oscillogrammes en différents points de l'alimentation positive simplifiée,
figure 11 : schéma électrique d'une forme simplifiée de l'alimentation négative selon l'invention.

La figure 2 représente le schéma électrique de principe de l'alimentation basse tension selon l'invention : elle correspond au diagramme en bloc 5 de la figure 1. Cette alimentation reçoit sur deux bornes d'entrée la tension du secteur, et délivre sur deux bornes de sortie une tension continue d'alimentation Voc, qui est de l'ordre de 15 Volts par exemple sous un débit pouvant atteindre 150 milliampères. Le fondement de cette alimentation est donc qu'un premier condensateur 6 est chargé directement par le secteur, et qu'il transfère sa charge électrique à un second condensateur 7, qui sert de source d'énergie pour le circuit d'utilisation branché aux bornes de sortie. L'énergie du premier condensateur 6 est transférée au second condensateur 7 à travers un moyen de commutation qui est un thyristor ou un triac 8. Ce moyen de commutation est ouvert ou fermé par un circuit de surveillance 9 qui mesure en permanence le niveau d'énergie soit dans le second condensateur 7 soit dans le premier condensateur 6. Lorsque le niveau dans le condensateur 7 s'abaisse en dessous d'un seuil prédéterminé le circuit de surveillance 9 agit sur la gachette du thyristor ou du triac 8 ce qui permet de recharger le second condensateur 7.

Le premier condensateur 6, de capacité de l'ordre de 2,2 $\mu$F/600V, est chargé par le secteur par l'intermédiaire d'une impédance en série 10. Une self 11 permet de lisser le courant qui est transféré du premier vers le second condensateur 7, électrochimique, de capacité de l'ordre de 2200 $\mu$F sous 25 V.

Ce schéma de base, qui est valable pour les quatre formes d'alimentation décrites par la suite, positive, négative, et leurs deux formes simplifiées, est explicité plus en détail dans la figure 3.

L'impédance série 10 de la figure 2 est en fait, sur la figure 3 constituée par un condensateur 12, connecté au point chaud du secteur et un montage redresseur constitué par les deux diodes 13 et 14. Le condensateur 12 sert de doubleur de tension, ce qui permet de charger davantage et plus rapidement le condensateur 6, donc de stocker davantage d'énergie dans un plus petit volume. Le condensateur 12 sert également d'impédance série, avant le pont redresseur constitué par les diodes 13 et 14. Pendant la demie période croissante de la tension du secteur, un courant charge en positif le condensateur 6, à travers le circuit composé par 12 et 14. Pendant la demie période décroissante du secteur, la diode 13 charge le condensateur 6 à l'envers. Le cycle peut donc se répéter à chaque période secteur. La charge du condensateur 6 est cummulable jusqu'à obtenir à ses bornes une tension d'environ 600 Volts, si le secteur est de 220 Volts.

Le circuit de surveillance 9 de la figure 2 est composé, sur la figure 3, par l'ensemble des composants, hormis la self 11 et le thyristor 8, qui se trouvent entre les deux condensateurs 6 et 7. Ce circuit de surveillance comprend un condensateur de déclenchement 15, qui déclenche le thyristor ou le triac 8 à travers un diac 16. Le condensateur 15 est chargé à partir de la tension aux bornes du condensateur 6, par l'intermédiaire d'une résistance 17 de valeur élevée et d'une diode zéner 18. Mais l'énergie aux bornes du condensateur 15 est également surveillée par un transistor 19 monté en parallèle avec le condensateur 15, et dont la base est reliée à un pont diviseur constitué par une diode zéner 20 en série avec deux résistances 21 et 22. La diode zéner 20 est réunie au point chaud du circuit d'utilisation ou du condensateur 7, et la base du transistor 19 est réunie au point intermédiaire entre les deux résistances 21 et 22.

La diode zéner 18 sert au démarrage, lorsqu'on branche l'alimentation basse tension. Elle permet de ne pas transférer de charge depuis le condensateur 6 vers le condensateur 7 tant que le premier condensateur 6 n'est pas suffisamment chargé et n'a pas atteint au moins la tension de la diode zéner 18. Sans la diode zéner le secteur charge immédiatement le condensateur 15, qui amorce le thyristor 8. La résistance 17 est de très forte valeur : 470.000 ohms par exemple, pour ne pas décharger le premier condensateur 6. Si la résistance 17 est supprimée, la charge du condensateur 6 est limitée par la tension de basculement de la diode zéner 18.

Lorsque l'alimentation est en service, et après la période de démarrage, si la tension Vcc est supérieure à la tension aux bornes des résistances 22 et 21 plus la tension d'avalanche de la diode zéner 20, le transistor 19 est saturé. Puisqu'il conduit il court-circuite le condensateur 15 qui ne peut se charger, et le thyristor 8 reste bloqué.

Lorsque la tension Vcc devient inférieure à la tension aux bornes des résistances 22, 21 et la zéner 20, le transistor 19 se bloque. Le condensateur 15 se charge alors par l'intermédiaire par la résistance 17 et la zéner 18, et lorsque sa charge a atteint une certaine valeur il génère une impulsion dans la gachette du thyristor 8 par l'intermédiaire du diac 16. L'énergie stockée dans le premier condensateur 6 est transféré dans le second condensateur 7 par l'intermédiaire du thyristor 8 ; l'inductance 11 permet de controler le courant pendant cette phase de transfert.

La valeur de la diode zéner 20 fixe le seuil minimum de l'alimentation. La tension maximum est déterminée par le rapport des condensateurs 6 et 7. Ces deux grandeurs de tensions minima et maxima déterminent le taux d'ondulation. La fréquence de charge du condensateur 7 est fonction du courant débité par l'alimentation. On peut obtenir une tension de sortie Vcc ajustable en remplaçant l'une des deux résistances 21 et 22, ou les deux, par un potentiomètre qui permet de faire varier le niveau d'énergie stockée dans le condensateur 7.

Le condensateur 6 se comporte dans ce montage comme un filtre passe-bas : il supprime tout risque d'amorçage intempestif du thyristor 8 pour des transitoires provenant du secteur.

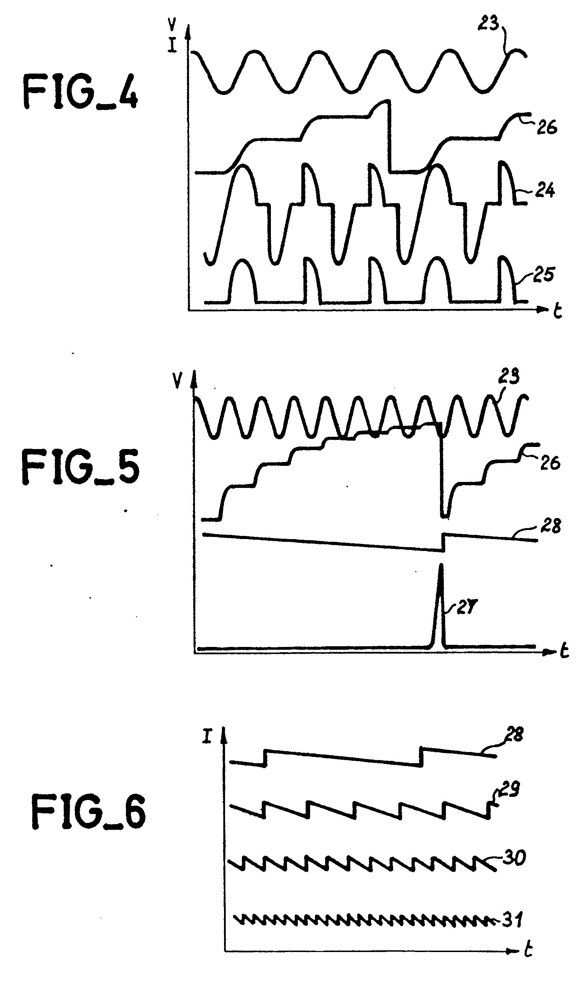

Les figures 4, 5 et 6 fournissent les oscillagrammes mesurés en différents points du circuit de l'alimentation selon l'invention de la figure 3. Sur la figure 4 la courbe 23 représente la tension du secteur, considéré comme base de temps pour les oscilogrammes. La courbe 25 donne le courant de charge du condensateur 6, la courbe 24 donne le courant total dans le condensateur 12. Le courant négatif est dû à la diode 13. La courbe 26 représente la tension aux bornes du condensateur 6 : on voit qu'à chaque alternance du secteur, la tension aux bornes du condensateur 6 augmente jusqu'à atteindre une valeur proche de 600 Volts.

Sur la figure 5, la tension du secteur étant toujours considérée comme une base de temps en 23, on voit que la tension aux bornes du condensateur 15 est représentée en 27 : cette tension ne varie pas jusqu'au moment où le transistor 19 se bloque. Le condensateur 15 se charge alors rapidement, à partir du condensateur 6, et à travers la résistance 17 et la diode zéner 18. Au moment où le condensateur 15 a atteint une tension à ses bornes qui permet de faire basculer le diac 16 et conduire le thyristor 8, l'énergie stockée dans le condensateur 6 est brusquement transférée dans le condensateur 7. Cela correspond à la brusque chute de tension sur la courbe 26, et à une remontée du niveau d'énergie sur la courbe 28 qui donne la tension de sortie de l'alimentation selon l'invention.

La figure 6 donne l'influence du courant de sortie sur la fréquence du transfert de charge entre les deux condensateurs 6 et 7. Pour une tension de sortie de 15 Volts, la courbe 28 correspond à une intensité de 10 milliampères, la courbe 29 à une intensité de 40 milliampères, la courbe 30 à une intensité de 70 milliampères, et la courbe 31 à une intensité de 100 milliampères. Le transfert d'énergie est d'autant plus rapide entre les deux condensateurs que le circuit qui consomme l'énergie stockée dans le second condensateur 7 absorbe une intensité plus élevée.

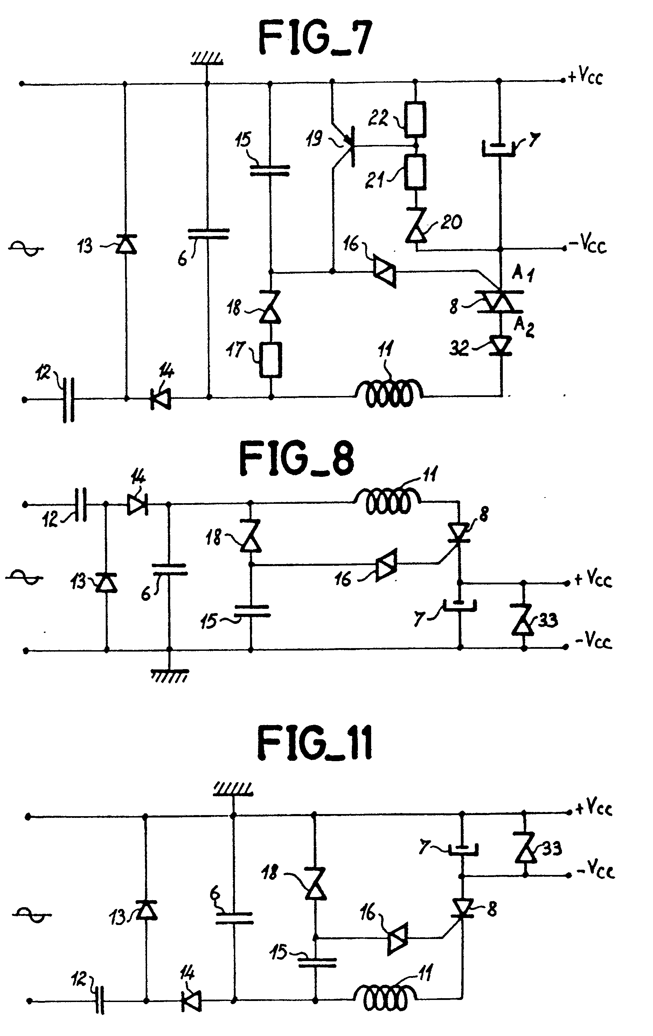

La figure 7 donne la schéma électrique d'une alimentation négative selon l'invention. Par rapport au schéma d'une alimentation à sortie positive de la figure 3, la schéma de la figure 7 est dans son ensemble symétrique par rapport à la masse, qui est ici constituée par la borne positive de la tension de sortie. Bien entendu les composants polarisés tels que les diodes 13 et 14, le transistor 19, et le condensateur électrochimique 7 sont adaptés à une sortie à tension négative.

Dans l'alimentation sans transformateur selon l'invention, la tension aux bornes du second condensateur 7 est surveillée. Le circuit de commande de la gachette du moyen de commutation 8 doit être connecté sur la sortie de l'alimentation, mais comme celle-ci est négative on ne peut disposer que d'une impulsion de déclenchement négative. Dans ces conditions, un thyristor ne peut plus être utilisé, mais le triac peut s'amorcer et permettre le transfert de charge entre les deux condensateurs 6 et 7. Par conséquent pour une alimentation à sortie négative le moyen de commutation est un triac 8, avec une diode 32, montée en série sur l'anode A2 du triac pour supprimer tout risque de conduction inverse.

Mis à part le remplacement d'un thyristor par un triac, le fonctionnement de l'alimentation négative de la figure 7 est donc en tout point comparable au fonctionnement de l'alimentation positive de la figure 3, et les oscillogrammes fournis en figures 4, 5 et 6 sont transposables à une sortie sous tension négative.

Le schéma électrique de la figure 8 correspond à une forme simplifiée de l'alimentation de l'invention, à sortie positive, et sans transformateur abaisseur de tension.

Alors que selon les schémas des figures 3 et 7, le dispositif de surveillance 9 surveillait la tension aux bornes du condensateur de sortie 7, dans la forme simplifiée, en figure 8 pour une tension positive et en figure 11 pour une tension négative, le système de surveillance contrôle la tension aux bornes du premier condensateur 6.

Le procédé de charge du premier condensateur 6 sur le secteur est identique à celui utilisé dans les montages précédents. A chaque période du secteur, la tension aux bornes du condensateur 6 augmente jusqu'à un seuil fixé par la valeur de la diode zéner 18 : la tension de seuil pour le déclenchement du moyen de commutation 8 est égale à la tension de la zéner 18 plus la tension de sortie Vcc. Dans cette forme simplifiée de montage le circuit de surveillance est constitué uniquement par une diode zéner 18 en série avec un condensateur 15, le diac 16 étant branché au point commun entre ces deux composants. Le condensateur 15 se charge à travers la diode zéner 18, et lorsque la tension à ses bornes atteint le seuil de retournement du diac 16, il génère une impulsion dans la gachette du moyen de commutation, le thyristor 8. Le thyristor s'amorce, et l'énergie stockée dans le premier condensateur 6 est transférée dans le second condensateur 7. La tension aux bornes du condensateur 7 augmente jusqu'à une tension maximale définie par la caractéristique d'une diode zéner 33 montée aux bornes du premier condensateur 7.

Dans ce système d'alimentation simplifiée, la fréquence de charge du second condensateur 7 est donc indépendante de la puissance consommée.

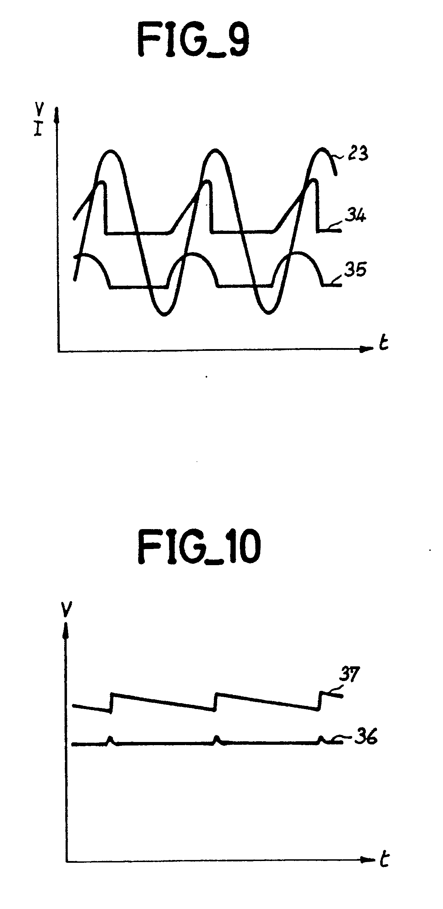

Les figures 9 et 10 donnent des oscillogrammes de charge premier condensateur 6, et de la tension de sortie. Sur la figure 9, la tension du secteur est rapportée en 23 comme base de temps. La courbe 34 donne la tension aux bornes du condensateur 6, qui se charge régulièrement lorsque la demie alternance est positive, et la courbe 35 donne le courant de charge du condensateur 6. Sur la figure 10, la courbe 36 correspond à la variation de la tension de la sortie pour une intensité consommée de 30 milliampères tandis que la courbe 37 donne la variation de tension de sortie pour une intensité consommée de 150 milliampèrres. On voit donc par comparaison avec les courbes 28 et 31 de la figure 6, que dans la forme simplifiée de l'alimentation selon l'invention la fréquence de charge du second condensateur 7 est indépendante de la puissance consommée.

La valeur du premier condensateur 6 doit être suffisante pour permettre de charger le condensateur 7 à la tension de sortie Vcc, lorsque le courant consommé est maximal. Si le courant de sortie est faible, le condensateur 7 se décharge peu et la diode zéner est alors traversée par le courant de décharge du condensateur 6.

La figure 11 représente le schéma électrique d'une alimentation simplifiée selon l'invention, à tension de sortie négative. De même que l'alimentation négative de la figure 7 était symétrique de l'alimentation positive de la figure 3, cette alimentation négative simplifiée, en figure 11, est symétrique de l'alimentation positive simplifiée de la figure 8. Mais étant donné que dans le schéma simplifié on ne surveille plus la tension aux bornes de sortie sur le condensateur 7, mais la tension à l'entrée sur le condensateur 6, il s'en suit que le signal d'impulsion n'est plus un signal négatif. Il n'y a pas de référence par rapport aux bornes de -Vcc. Donc on peut utiliser un thyristor 8, dont la gachette est du côté négatif.

Pour l'ensemble des quatre schémas d'alimentation positive et négative, dans les formes normales ou simplifiées, on peut utiliser un triac à la place du thyristor 8. Il faut simplement brancher la gachette du triac de façon correcte par rapport à la tension de sortie, selon qu'elle est positive ou négative.

L'alimentation basse tension selon l'invention possède un certain nombre d'avantages, dans ses deux formes normales ou simplifiées :

- le potentiel de masse de l'alimentation est connecté directement sur le secteur
- les composants utilisés sont des composants standards,
- les schémas sont simples,
- l'alimentation est auto-protégée par une impédance série contre les courts-circuits en sortie,
- le rendement est excellent et l'encombrement faible, ce qui est nécessaire pour son application avec des systèmes réalisés à base de circuits intégrés.

La forme simplifiée de l'alimentation selon l'invention présente seulement l'inconvénient d'une puissance dissipée dans la diode zéner de sortie, 33, lorsque l'alimentation est en sous charge : cette diode zéner peut débiter jusqu'à 1 W à vide pour une alimentation prévue pour 100 milliampères en sortie.

A titre d'exemple non limitatif, les valeurs des composants utilisés aussi bien pour la forme normale que pour la forme simplifiée de l'alimentation basse tension sont les suivantes :

Circuit de charge du premier condensateur :
- condensateur 6 : 2,2 $\mu$F, 600 V
- condensateur 12 : 1 $\mu$F
- diodes 13 et 14 : 1 N 4007

Self 11 : 2 m H

Thyristor 8 : TYN 808, ou triac BTA 06700B + diac 16 DB3

Second condensateur 7 : 2200 $\mu$F, 25 V

Circuit de surveillance :
- condensateur 15 : 22 nF
- Zéner 18 : 150 V
- résistance 17 : 470 k$\Omega$
- transistor 19 : 2 N 2222 pour une alimentation positive
- transistor 19 : 2 N 2907 pour une alimentation négative
- Zéner 20 : 15 V
- résistance 21 : 10 k$\Omega$
- résistance 22 : 1 k$\Omega$

L'alimentation basse tension sans transformateur selon l'invention peut être réalisée avec d'autres composants que ceux cités ci-dessus à titre d'exemple sans sortir du domaine de l'invention, qui est précisée par les revendications suivantes.

Le condensateur 6 se comporte dans ce montage comme un filtre passe-bas et il supprime tout risque d'amorçage intempestif du thyristor 8.

## Revendications

1. Circuit d'alimentation en basse tension sans transformateur abaisseur de la tension du secteur, comportant : un premier condensateur (6) branché au secteur par l'intermédiaire d'un circuit de charge (10) redresseur ; un deuxième condensateur (7) dont une première borne est reliée à une première borne du premier condensateur (6) et dont la deuxième constitue la sortie du circuit et est reliée à la deuxième borne du premier condensateur par l'intermédiaire d'un moyen de commutation (8) ; caractérisé en ce qu'il comprend un moyen de surveillance qui autorise le transfert d'énergie du premier condensateur (6) vers le deuxième (7) en activant le moyen de commutation (8) quand la tension aux bornes du deuxième condensateur devient inférieure à un seuil prédéterminé et en ce que les deux premières bornes des condensateurs (6, 7) sont directement reliées à une phase du secteur constituant la masse.

2. Circuit d'alimentation basse tension selon la revendication 1, caractérisé en ce que le circuit de charge (10) comporte une impédance série.

3. Circuit d'alimentation basse tension selon la revendication 1, caractérisé en ce que le circuit de charge (10) est un redresseur doubleur de tension (12, 13, 14).

4. Circuit d'alimentation en basse tension selon la revendication 1, caractérisé en ce que le circuit de surveillance (9) comporte :
   - un diac (16), connecté entre la gâchette du moyen de commutation (8) et le point commun à condensateur de déclenchement (15) et à une diode zener (18), le condensateur de déclenchement (15) étant chargé à partir du premier condensateur (6) à travers une résistance (17) et la diode zener (18)
   - un transistor (19), monté en parallèle avec le condensateur de déclenchement (15), et dont le basse est connectée à un pont diviseur constitué par une diode zener (20) et deux résistances (21, 22) entre la sortie du circuit et la masse.

5. Circuit d'alimentation en basse tension selon la revendication 1, caractérisé en ce que le moyen de commutation (8) est un thyristor si la tension de sortie est positive par rapport à la masse.

6. Circuit d'alimentation en basse tension selon la revendication 1, caractérisé en ce que le moyen de commutation (8) est un triac si la tension de sortie est négative par rapport à la masse.

## Claims

1. A low voltage supply circuit without a mains voltage step-down transformer, comprising: a first capacitor (6) connected to the mains through a rectifying charge circuit (10); a second capacitor (7), a first terminal of which is connected to a first terminal of said first capacitor (6) and the second terminal of which forms the circuit output and is connected to the second terminal of said first capacitor through switching means (8); characterized in this that it comprises control means which authorizes an energy transfer from said first capacitor (6) to said second capacitor (7) by activating said switching means (8) when the voltage across said second capacitor becomes lower than a predetermined threshold, and the two first terminals of said capacitors (6, 7) are directly connected to a phase of the mains constituting the ground.

2. A low voltage supply circuit according to claim 1, characterized in this that said charge circuit (10) comprises a series impedance.

3. A low voltage supply circuit according to claim 1, characterized in this that said charge circuit (10) is a voltage-doubling rectifier (12, 13, 14).

4. A low voltage supply circuit according to claim 1, characterized in this that said control circuit (9) comprises:
   - a diac (16) connected between the gate of said switching means (8) and the junction of a triggering capacitor (15) and a zener diode (18), said triggering capacitor (15) being charged from said first capacitor (6) through a resistor (17) and said zener diode (18);
   - a transistor (19), parallel connected to said triggering capacitor (15), the base of which is connected to a dividing bridge formed by a zener diode (20) and two resistors (21, 22) between the circuit output and the ground.

5. A low voltage supply circuit according to claim 1, characterized in this that said control means (8) is a thyristor if the output voltage is positive with respect to the ground.

6. A low voltage supply circuit according to claim 1, characterized in this that said control means (8) is a triac if the output voltage is negative with respect to the ground.

**Patentansprüche**

1. Niederspannungsversorgungsschaltung ohne Netzspannungsabwärtstransformator mit einem ersten Kondensator (6), der mit dem Netz über eine gleichrichtende Ladeschaltung (10) verbunden ist; einem zweiten Kondensator (7), dessen einer Anschluß mit einem ersten Anschluß des ersten Kondensators (6) verbunden ist und dessen zweiter Anschluß den Schaltungsausgang bildet und mit einem zweiten Anschluß des ersten Kondensators (6) über eine Kommutierungseinrichtung (8) verbunden ist, dadurch gekennzeichnet, daß die Schaltung eine Überwachungseinrichtung aufweist, die die Energieübertragung vom ersten Kondensator (6) zum zweiten zuläßt, indem sie die Kommutierungseinrichtung (8) aktiviert, wenn die Spannung an den Anschlüssen des zweiten Kondensators niedriger als eine vorbestimmte Schwelle wird, und daß die beiden ersten Anschlüsse der Kondensatoren (6, 7) direkt mit einer Netzphase, die der Masse entspricht, verbunden sind.

2. Niederspannungsversorgungsschaltung nach Anspruch 1, dadurch gekennzeichnet, daß die Ladeschaltung (10) eine Serienimpedanz aufweist.

3. Niederspannungsversorgungsschaltung nach Anspruch 1, dadurch gekennzeichnet, daß die Ladeschaltung (10) ein Gleichrichter mit Spannungsverdopplung (12, 13, 14) ist.

4. Niederspannungsversorgungsschaltung nach Anspruch 1, dadurch gekennzeichnet, daß die Überwachungsschaltung (9) folgende Merkmale aufweist:

   - einen Diac (16), der zwischen den Steueranschluß der Kommutierungseinrichtung (8) und einen für einen Startkondensator (13) und eine Zenerdiode (18) gemeinsamen Schaltungspunkt geschaltet ist, wobei der Startkondensator (15) seitens des ersten Kondensators (6) über einen Widerstand (17) und die Zenerdiode (18) geladen wird;
   - einen Transistor (19), der parallel zu dem Startkondensator (15) geschaltet ist und dessen Basis mit einem Spannungsteiler verbunden ist, der durch eine Zenerdiode (20) und zwei Widerstände (21, 22) zwischen dem Schaltungsausgang und Masse gebildet ist.

5. Niederspannungsversorgungsschaltung nach Anspruch 1, dadurch gekennzeichnet, daß die Kommutierungseinrichtung (8) ein Thyristor ist, falls die Ausgangsspannung in bezug zur Masse positiv ist.

6. Niederspannungsversorgungsschaltung nach Anspruch 1, dadurch gekennzeichnet, daß die Kommutierungseinrichtung (8) ein Triac ist, falls die Ausgangsspannung in bezug zur Masse negativ ist.

# FIG_1

# FIG_2

# FIG_3

FIG_4

FIG_5

FIG_6

# FIG_7

# FIG_8

# FIG_11

# FIG_9

# FIG_10